(19) Europäisches Patentamt / European Patent Office / Office européen des brevets

(11) **EP 4 206 655 A1**

(12) **EUROPEAN PATENT APPLICATION**

(43) Date of publication:
**05.07.2023 Bulletin 2023/27**

(21) Application number: **21217931.1**

(22) Date of filing: **28.12.2021**

(51) International Patent Classification (IPC):
**G01N 21/65** (2006.01)    **G01N 21/27** (2006.01)
**G01N 21/47** (2006.01)

(52) Cooperative Patent Classification (CPC):
**G01N 21/65; G01N 21/274;** G01N 2021/4709;
G01N 2201/0221; G01N 2201/121; G01N 2201/127

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Serstech AB**
**227 64 Lund (SE)**

(72) Inventor: **Szybek, Katja**
**223 50 Lund (SE)**

(74) Representative: **AWA Sweden AB**
**Box 5117**
**200 71 Malmö (SE)**

(54) **SYSTEM AND METHOD FOR RAMAN SPECTROSCOPY**

(57)    The present inventive concept relates to a method for compensating a first signal based on a second signal, and to a system for Raman spectroscopy. The system (100) for Raman spectroscopy comprising: a dichroic mirror (113) configured to reflect a first portion (104a) of light having wavelengths within a first wavelength interval and to transmit a second portion (104b) of light having wavelengths within the first wavelength interval, and to transmit light having wavelengths within a second wavelength interval; a light source (110) configured to illuminate the dichroic mirror (113) with light having wavelengths within the first wavelength interval; a spectrometer (120) comprising: a light sensor (126), a dispersive element (124), a first entrance slit (121a), and a second entrance slit (121b), wherein the spectrometer (120) is configured to direct, via the dispersive element (124), light entering through the first entrance slit (121a) to a first portion (126a) of the light sensor (126), and to direct, via the dispersive element (124), light entering through the second entrance slit (121b) to a second portion (126b) of the light sensor (126); wherein the dichroic mirror (113) is configured to reflect light of the first portion (104a) to illuminate a sample, and to transmit light of the second portion through the dichroic mirror (113); wherein the dichroic mirror (113) is further configured to transmit light scattered by the sample, wherein the light scattered by the sample has wavelengths within the second wavelength interval; wherein the spectrometer (120) is arranged to receive, at the first entrance slit (121a), light scattered by the sample, and to receive, at the second entrance slit (121b), light of the second portion transmitted through the dichroic mirror (113); the system (100) further comprising: circuitry (160) configured to execute: a determination function (172) configured to determine a first signal associated with the first portion (126a) of the light sensor (126), and a second signal associated with the second portion (126b) of the light sensor (126); and wherein the first signal includes a first information pertaining to a Raman spectrum of the sample and the second signal includes a second information pertaining to wavelengths of light emitted by the light source (110), thereby allowing the first information to be compensated by means of the second information.

FIG. 2

## Description

Technical field

The present inventive concept relates to a system for Raman spectroscopy. The present inventive concept further relates to a method for compensating a first signal based on a second signal.

Background of the invention

To detect and to determine different substances is highly desired in a large variety of applications ranging from chemical analysis to in-field determination of potentially hazardous and toxic substances. In many situations correct determination of a substance is of utmost importance. For instance, to be able to determine if a substance is hazardous, e.g. explosive, or not is critical since it may otherwise result in severe consequences with personnel injuries and material losses. Similarly, it may also be critical to determine if a substance is toxic or not since a wrongful determination may result in serious consequences involving personnel and environmental risks. Further, it is important to verify that a drug is correctly synthesized since an incorrectly synthesized drug may become harmful instead of curative for a subject.

A common approach to investigate properties of a substance is to let the substance undergo a chemical analysis. A chemical analysis of a substance is often accurate but are typically complex. Moreover, chemical analysis often require that various further substances or analytes are used in the analysis. Such analysis therefore tends to become costly and time consuming. Another drawback resides in that such analysis generally are too complicated and time consuming to be conducted under field conditions.

Another commonly used approach for detecting and identifying different substances is to use some form of spectroscopic analysis. A common type of spectroscopic analysis used is optical spectroscopy where light having interacted with the substance in question is analyzed using a spectrometer. The light interacting with the substance is scattered by the substance resulting in that the scattered light is affected by the substance. Such scattering from a substance can either be elastic or inelastic. Elastically scattered photons exhibit the same energy as photons impinging on the substance at hand. Inelastically scattered photons, on the other hand, exhibit a different energy as compared to photons impinging on the substance at hand. Inelastically scattered photons therefore either gain or lose energy.

Both elastically and inelastically scattered photons may be used in spectroscopic analyses of substances. When looking at elastically scattered photons certain properties, such as color, of the substance may be determined. However, when it comes to determining a certain substance more sophisticated spectroscopic techniques also relying on inelastically scattered photons are generally required. Raman spectroscopy is a spectroscopic technique relying on inelastic scattering of photons, known as Raman scattering. In Raman spectroscopy a source of monochromatic light, usually a laser, is used. The light source may emit light in the visible, near infrared, or near ultraviolet range, although X-rays can also be used. The laser light interacts with molecular vibrations, phonons, or other excitations in the molecular system, resulting in that the energy of the laser photons being shifted up or down in the inelastically scattered light thereof. The shift in energy gives information about the vibrational modes in the molecular system at hand. In other words, inelastically scattered light from the molecules of the substance at hand gives rise to a vibrational spectrum that includes of a series of lines or peaks constituting a molecular "fingerprint" for the substance. Hence a substance or material will give rise to a unique Raman spectrum, i.e. its "fingerprint". The unique Raman spectrum makes Raman spectroscopy suitable for identifying or determining substances or materials. In many fields of technology Raman spectroscopy is a well-established spectroscopic technique for rapid identification of substances and chemicals with high degree of accuracy.

A typical Raman spectrum of a substance illustrates the shift of Raman wavelengths relative to elastically scattered light, typically referred to as Rayleigh-scattered light. The Rayleigh-scattered light has the same wavelength as the incident light (i.e., the light emitted by the light source) whereas the Raman wavelengths are shifted up or down relative to the Rayleigh-scattered light. The vertical axis of a Raman spectrum typically represents the intensity of the Raman wavelengths and yields the concentration of the chemical components of the sample or substance, whereas the horizontal axis of a Raman spectrum typically represents the wavelength shift in relation to the Rayleigh-scattered light.

The light from Raman scattering is typically associated with weak intensities and may be difficult to observe without intense monochromatic excitation and a sensitive detector. Typically, 1 out of $10^6$ - $10^9$ photons scattered by a sample is a photon relating to a Raman scattering. Modern technical development of lasers, detectors, and optical components as well as continued miniaturization of electronic components have made it possible to produce fast and reliable portable Raman instruments which are suitable to use under field conditions.

However, variations in the components can affect the stability and performance of Raman instruments, in particular for use under field conditions. For instance, instabilities of the laser used to illuminate samples can greatly reduce the performance of Raman instruments.

Summary of the invention

It is an object to, at least partly, mitigate, alleviate, or eliminate one or more of the above-identified deficiencies in the art and disadvantages singly or in any combination and solve at least the above-mentioned problem.

It is a further object to provide a system and a method for Raman spectroscopy which improves a determination and/or identification of a sample.

It is a further object to provide a system and a method for Raman spectroscopy which improves a determination and/or identification of a sample under field conditions.

It is also an object to provide a cost-effective system and method for Raman spectroscopy.

According to a first aspect a system for Raman spectroscopy is provided. The system for Raman spectroscopy comprising: a dichroic mirror configured to reflect a first portion of light having wavelengths within a first wavelength interval and to transmit a second portion of light having wavelengths within the first wavelength interval, and to transmit light having wavelengths within a second wavelength interval; a light source configured to illuminate the dichroic mirror with light having wavelengths within the first wavelength interval; a spectrometer comprising: a light sensor, a dispersive element, a first entrance slit, and a second entrance slit, wherein the spectrometer is configured to direct, via the dispersive element, light entering through the first entrance slit on a first portion of the light sensor, and to direct, via the dispersive element, light entering through the second entrance slit on a second portion of the light sensor; wherein the dichroic mirror is configured to reflect light of the first portion to illuminate a sample, and to transmit light of the second portion through the dichroic mirror; wherein the dichroic mirror is further configured to transmit light scattered by the sample, wherein the light scattered by the sample has wavelengths within the second wavelength interval; wherein the spectrometer is arranged to receive, at the first entrance slit, light scattered by the sample, and to receive, at the second entrance slit, light of the second portion transmitted through the dichroic mirror; the system further comprising: circuitry configured to execute: a determination function configured to determine a first signal associated with the first portion of the light sensor, and a second signal associated with the second portion of the light sensor; and wherein the first signal includes a first information pertaining to a Raman spectrum of the sample and the second signal includes a second information pertaining to wavelengths of light emitted by the light source, thereby allowing the first information to be compensated by means of the second information.

Within the context of this disclosure, the wording "dichroic mirror" should be construed as a filter which is configured to selectively transmit light of a range of colors (wavelengths) while being configured to reflect other colors (wavelengths). The dichroic mirror may, e.g., be an interference filter. The dichroic mirror may be configured to reflect the first portion of light having wavelengths within the first wavelength range for light having incident angles within a range from 40° to 50°. The dichroic mirror may be configured to transmit the second portion of light having wavelengths within the first wavelength range for light having incident angles within a range from 40° to 50°. The dichroic mirror may be configured to transmit light having wavelengths within the second wavelength range for light having incident angles within a range from 40° to 50°. It is to be understood that a relative intensity between light of the first portion and light of the second portion may depend on the actual angle of incidence with which light emitted on the light source strikes the dichroic mirror. It is further to be understood that the intensity of light having wavelengths within the second wavelength interval and transmitted through the dichroic mirror may depend on the actual angle of incidence with which light emitted on the light source strikes the dichroic mirror.

Within the context of this disclosure, the wording "dispersive element" should be construed as an optical element which directs or diffracts light in different directions depending on color (wavelength). An example of such dispersive element is a diffraction grating.

By means of the present inventive concept, information associated with a Raman spectrum of the sample and information associated with a wavelength of excitation light (i.e., light emitted by the light source) is captured using a single light sensor. Without using the present inventive concept, it may be difficult to properly detect/resolve light having substantially different intensities on a single light sensor, since that light sensor may be overexposed for higher intensities and underexposed for lower intensities. The intensity of light emitted by the light source is typically substantially higher than light associated with Raman scattering, it is therefore advantageous that the second signal is determined from light transmitted through the dichroic mirror, since the intensity of light from the light source is substantially reduced after being transmitted through the dichroic mirror. This, in turn, results in that intensities of light on the second portion of light sensor is lower and may therefore be more similar to intensities of light on the first portion of the light sensor (i.e., intensities of light associated with Raman scattering of the sample). Hence, light of the first portion of the light sensor and light of the second portion of the light sensor may be properly detected/resolved simultaneously. Further, since information regarding the wavelength of the light source is captured, this information may be used to determine variations in wavelength and/or intensity of the excitation light. This information may then be used to, e.g., compensate the recorded Raman spectrum for drifts in wavelength and/or intensity of the excitation light.

The circuitry may be further configured to execute: a compensation function configured to compensate the first signal based on the second signal.

An associated advantage is that the Raman spectrum may be compensated for variations or drifts in wavelength and/or intensity of light emitted by the light source. An improved identification and/or determination of the sample may thereby be allowed.

The compensation function may be configured to compensate the first information based on the second information by being configured to: determine a wavelength shift of light emitted by the light source based on the second signal; and compensate the first signal based on the determined wavelength shift of the light emitted by the light source.

An associated advantage is that the Raman spectrum may be compensated for variations or drifts in wavelength of light emitted by the light source. An improved identification and/or determination of the sample may thereby be allowed.

The system may further comprise: an optical bandpass filter arranged between the light source and the dichroic mirror such that the light source may illuminate the dichroic mirror via the optical bandpass filter; and wherein the optical bandpass filter may be configured to transmit light having wavelengths within the first wavelength interval.

Within the context of this disclosure, the wording "optical bandpass filter" should be construed as an optical element configured to selectively transmit electromagnetic radiation having wavelengths within a range of wavelengths while being configured to block electromagnetic radiation having other wavelengths. The optical element may be configured to block electromagnetic radiation having other wavelengths by reflecting and/or absorbing that radiation.

An associated advantage is that wavelengths of light emitted by the light source and reaching the dichroic mirror may be within the first wavelength interval, whereby light reaching the sample may have wavelengths within the first wavelength interval. A better determination of wavelengths of the light reaching the sample may allow for an improved identification and/or determination of the sample.

The system may further comprise: an optical longpass filter arranged between the dichroic mirror and the spectrometer such that the light scattered by the sample may be received at the first entrance slit via the optical longpass filter; and wherein the optical longpass filter may be configured to block light having wavelengths within the first wavelength interval.

Within the context of this disclosure, the wording "optical longpass filter" should be construed as an optical element configured to transmit electromagnetic radiation having wavelengths longer than a cut-off wavelength while being configured to block electromagnetic radiation having wavelengths shorter than the cut-off wavelength. The optical element may be configured to block electromagnetic radiation having other wavelengths by reflecting and/or absorbing that radiation. Such optical element may, within the art, be referred to as a longpass edge filter.

An associated advantage is that an intensity of light having a wavelength within the first wavelength interval or shorter reaching the first entrance slit may be reduced. Put differently, an intensity of light emitted by the light source and reflected by the sample towards the first entrance slit may be reduced since the optical longpass filter is configured to block that light. Further, an intensity of Rayleigh-scattered light and/or light associated with fluorescence emanating from the sample towards the first entrance slit may be reduced since the optical longpass filter is configured to block that light.

The system may further comprise: a reflective element configured to direct the light of the second portion transmitted through the dichroic mirror to the second entrance slit.

Within the context of this disclosure, the wording "reflective element" should be construed as an optical element configured to reflect incident electromagnetic radiation. The reflective element may be configured to reflect light having wavelengths within a large range of wavelengths. An example of such a reflective element may be a silver-coated mirror. The reflective element may be configured to reflect light having wavelengths within a narrow range of wavelengths. An example of such a reflective element may be a dielectric mirror.

An associated advantage is that a more compact system for Raman spectroscopy may be allowed.

The reflective element may be configured to direct the light of the second portion such that the light of the second portion may be reflected by the dichroic mirror at a backside thereof prior to being received at the second entrance slit.

An associated advantage is that a more compact system for Raman spectroscopy may be allowed.

A further associated advantage is that reflecting the second portion of light on a backside of the dichroic mirror may further reduce the intensity of light on the second portion of the light sensor, since a part of the second portion of light may be transmitted through the dichroic mirror. This, in turn, may result in that the intensity of light on the second portion of the light sensor may be more similar to intensities of light on the first portion of the light sensor (i.e., intensities of light associated with Raman scattering of the sample).

The system may further comprise: a further dichroic mirror arranged in between the dichroic mirror and the spectrometer such that the light scattered by the sample may be transmitted through the further dichroic mirror prior to being received at the first entrance slit, and such that the light of the second portion may be reflected by the further dichroic mirror prior to being received at the second entrance slit.

An associated advantage is that an intensity of light having a wavelength within the first wavelength interval reaching the first entrance slit may be reduced. Put differently, an intensity of light emitted by the light source and reflected by the sample towards the first entrance slit may be reduced since the further dichroic mirror is configured to reflect that light. Further, an intensity of Rayleigh-scattered light emanating from the sample towards the first entrance slit may be reduced since the further dichroic mirror is configured to reflect that light. Furthermore, an intensity of light associated with fluorescence emanating from the sample may be reduced since the further dichroic mirror may be configured to reflect that light.

The system may further comprise: an optical fiber configured to convey the light of the second portion transmitted through the dichroic mirror to the second entrance slit.

An associated advantage is that a more compact and/or robust system for Raman spectroscopy may be allowed.

The system may be a handheld system.

An associated advantage is that the system may be used in field conditions, whereby a quicker identification and/or determination of the substance may be allowed.

According to a second aspect, a method for compensating a first signal based on a second signal, the first signal including information pertaining to a Raman spectrum of a sample and the second signal including information pertaining to wavelengths of light emitted by a light source is provided. The method comprising: emitting, from the light source, light having wavelengths within a first wavelength interval; reflecting, using a dichroic mirror, a first portion of the emitted light to a sample; transmitting, through the dichroic mirror, a second portion of the emitted light to a second entrance slit of a spectrometer; transmitting, through the dichroic mirror, light scattered by the sample to a first entrance slit of the spectrometer, wherein the light scattered by the sample has wavelengths within a second wavelength interval; dispersing, using a dispersive element of the spectrometer, the second portion of the emitted light onto a second portion of a light sensor of the spectrometer; dispersing, using the dispersive element of the spectrometer, the light scattered by the sample onto a first portion of the light sensor of the spectrometer; determining a second signal associated with the second portion of the light sensor, wherein the second signal includes information pertaining to wavelengths of the emitted light; determining a first signal associated with the first portion of the light sensor, wherein the first signal includes information pertaining to a Raman spectrum of the sample; and compensating the first signal based on the second signal, whereby the first information is compensated by means of the second information.

The act of compensating the first signal based on the second signal may comprise: determining a wavelength shift of the emitted light based on the second signal; and compensating the first signal based on the determined wavelength shift of the emitted light.

The above-mentioned features of the first aspect, when applicable, apply to this second aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Brief description of the drawings

The above and other aspects of the present inventive concept will now be described in more detail, with reference to appended drawings showing variants of the inventive concept. The figures should not be considered limiting the inventive concept to the specific variant; instead, they are used for explaining and understanding the inventive concept. As illustrated in the figures, the sizes of layers and regions are exaggerated for illustrative purposes and, thus, are provided to illustrate the general structures of variants of the present inventive concept. Like reference numerals refer to like elements throughout.

Figure 1 illustrates a system for Raman spectroscopy.
Figure 2 illustrates a first variant of an optical system of the system of Fig. 1.
Figure 3 illustrates a second variant of the optical system of the system of Fig. 1.
Figure 4 illustrates a third variant of the optical system of the system of Fig. 1.
Figure 5 illustrates a fourth variant of the optical system of the system of Fig. 1.
Figure 6 illustrates a spectrometer.
Figure 7 is a block scheme of a method for compensating a first signal based on a second signal, the first signal including information pertaining to a Raman spectrum of a sample and the second signal including information pertaining to wavelengths of light emitted by a light source.

Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

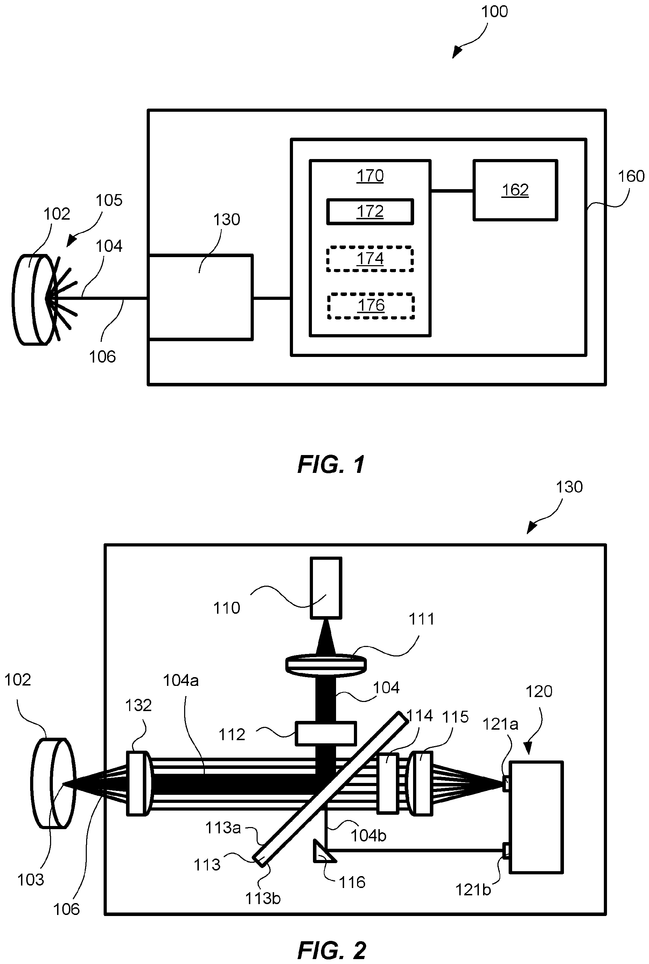

Figure 1 illustrates a system 100 for Raman spectroscopy. The system 100 for Raman spectroscopy comprises an optical system 130, and circuitry 160. Different variants of the optical system 130 is illustrated in Fig. 2 - Fig. 5 and will be discussed in more detail below. The system 100 of Fig. 1 may be a handheld system. Hence, the system 100 illustrated in Fig. 1 may be implemented as a single handheld system. It is to be understood that the system 100 may, even though they may not be illustrated in Fig. 1, comprise further features, such as means for input (e.g., a touchscreen and/or buttons) and a display for illustrating information (e.g., results of measurements performed by the system 100, actions needed to be taken by the user, etc.) to a user of the system 100, etc. The skilled person realizes that the system 100 may, even though they may not be illustrated in Fig. 1, comprise further components/features, such as a housing/casing, and/or an internal and/or external power source (e.g., a battery). The housing/casing may comprise the system 100 for Raman spectroscopy illustrated in Fig. 1. The power source may supply power to the components of the system 100 illustrated in Fig. 1. The circuitry 160 may, as illustrated in Fig. 1, comprise a processing unit 162 and/or a memory 170. The processing unit 162 may be a processor. The processor may be a central processing unit. The memory 170 may be a non-transitory computer-readable storage medium. The memory 170 may comprise program code portions which, when executed by the processing unit 162 of the circuitry 160, performs a function of the circuitry 160. Hence, the circuitry 160 may be configured to perform a specific function by the processing unit 162 being configured to execute program code portions corresponding to the specific function. One or more functions of the circuitry 160 may be implemented by one or more field-programmable gate arrays. It is to be understood that one or more functions of the circuitry 160 may be software and/or hardware implemented, or as a combination of software and hardware. For example, one or more functions may be implemented using one or more field-programmable gate arrays. The circuitry 160 may be configured to control one or all functions of the system 100 of Fig. 1. The circuitry 160 may further comprise a transceiver configured to transmit and/or receive a communication signal. The transceiver may comprise a wired and/or a wireless connection. The transceiver may communicate via a wired and/or wireless communication standard. The skilled person would be aware of a plurality of different wired and/or wireless communication standards that would be suitable, such as Wi-Fi, Ethernet, cellular, USB, etc. The transceiver may be used to transmit data from and/or receive data to the circuitry 160. The data may be any data related to the system 100 for Raman spectroscopy, e.g. a spectrum measured using the system 100, databases, etc. The components within the circuitry 160 may communicate via a databus (not illustrated in Fig. 1). The circuitry 160 may communicate with other components via the databus. For instance, the processing unit 162 may communicate with the memory 170 via the databus. Further, the circuitry 160 may communicate with one or more components of the optical system 130 via the databus. The skilled person would be aware of other communication standards that would be suitable for the circuitry 160.

The system 100 of Fig. 1 is emitting light 104 towards a sample 102. The sample 102 scatters light 105. The sample 102 may scatter light isotropically or anisotropically. At least a portion 106 of the light scattered by the sample 102 may be collected by the system 100. As will be discussed further below, the optical system 130 of the system 100 for Raman spectroscopy may comprise optics configured such that the collected portion of the light 105 scattered by the sample 102 may be increased.

Different variants of the optical system 130 will now be described with reference to Fig. 2 - 5. As illustrated in Fig. 2 - Fig. 5, the optical system 130 comprises a dichroic mirror 113, a light source 110, a spectrometer 120. As illustrated in the examples of Fig. 2 - Fig. 5, the optical system 130 may further comprise a first refractive element 111, an optical bandpass filter 112, a second refractive element 132, an optical longpass filter 114, and a third refractive element 115.

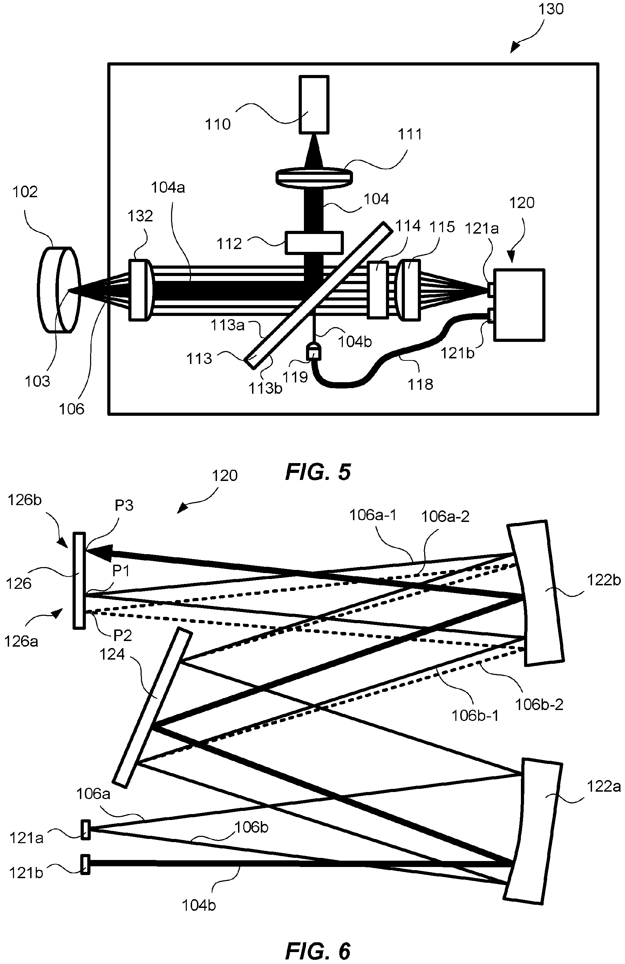

An example of the spectrometer 120 is illustrated in Fig. 6. As is illustrated in Fig. 6, the spectrometer 120 comprises a light sensor 126, a dispersive element 124, a first entrance slit 121a, and a second entrance slit 121b. As illustrated in Fig. 6, the spectrometer 120 may further comprise a first optical element 122a and a second optical element 122b. The light sensor 126 may be an image sensor. The light sensor 126 may comprise a charge-coupled device (CCD) or a complementary metal oxide semiconductor (CMOS). The light sensor 126 may comprise a matrix of pixels. The matrix of pixels may be rectangular. A number of pixels along a first direction of the light sensor 126 may be higher than a number of pixels along a second direction of the light sensor 126. For example, the light sensor 126 may be a linear image sensor. The linear image sensor may comprise a relatively large number of pixels along the first direction of the light sensor 126 and a relatively small number of pixels along the second direction of the light sensor 126. As a non-limiting example, the light sensor 126 may have 2048 pixels along the first direction of the light sensor 126 and 1 pixel along the second direction of the light sensor 126. The dispersive element 124 may be configured to separate incident light depending on wavelength. The dispersive element 124 may be a diffraction grating. The diffraction grating may be a reflective grating or a transmission grating. The spectrometer 120 may be configured to image the first entrance slit 121a and/or the second entrance slit 121b onto the light sensor 126. Hence, a width of the first entrance slit 121a may affect a spectral resolution of the spectrometer 120 for light entering through the first entrance slit 121a. A width of the second entrance slit 121b may affect a spectral resolution of the spectrometer 120 for light entering through the second entrance slit 121b. The width of the first entrance slit 121a may be within a range from 10 to 50 $\mu$m. The width of the second entrance slit 121b may be within a range from 10 to 50 $\mu$m. The spectrometer 120 may be arranged as illustrated in Fig. 6, which in the art may be referred to as a Czerny-Turner configuration. A spectrometer with such configuration will now briefly be discussed with reference to Fig. 6. Light entering through the first entrance slit 121a may be diverging, which is illustrated by a first light ray 106a and a second light ray 106b in Fig. 6. The first optical element 122a may be configured to reduce the divergence of the light entering through the first entrance slit 121a. Preferably, light entering through the first entrance slit 121a may be parallel after being reflected by the first optical element 122a. The first optical element 122a may, in this case, be a curved reflective element such as a curved mirror. This is illustrated by the first light ray 106a and the second light ray 106b being parallel after being reflected by the first optical element 122a. After being reflected by the first optical element 122a, the light may be dispersed by the dispersive element 124. This is illustrated in Fig. 6 by the first light ray 106a being dispersed into a first dispersed light ray 106a-1 and a second dispersed light ray 106a-2, and the second light ray 106b being dispersed into a third dispersed light ray 106b-1 and a fourth dispersed light ray 106b-2. In Fig. 6, the first dispersed light ray 106a-1 and the third dispersed light ray 106b-1 have the same wavelength and may therefore be parallel to each other after being reflected by the dispersive element 124. Similarly, the second dispersed light ray 106a-2 and the fourth dispersed light ray 106b-2 have the same wavelength and may therefore be parallel to each other after being reflected by the dispersive element 124. The dispersed light may be reflected by the second optical element 122b towards the light sensor 126. In this case, the second optical element 122b may be a curved reflective element such as a curved mirror. The second optical element 122b and the light sensor 126 may be configured such that each wavelength of the dispersed light being reflected by the second optical element 122b reaches the same point on the light sensor 126. This is illustrated in Fig. 6 by the first dispersed light ray 106a-1 and the third dispersed light ray 106b-1 arriving at a first point P1 on the light sensor 126, and the second dispersed light ray 106a-2 and the fourth dispersed light ray 106b-2 arriving at a second point P2 on the light sensor 126. The first point P1 and the second point P2 may be on a first portion 126a of the light sensor 126. Hence, the spectrometer 120 is configured to direct, via the dispersive element 124, light entering through the first entrance slit 121a to the first portion 126a of the light sensor 126. It is to be understood that the first point P1 and the second point P2 may each have an extension. The extensions, or sizes of the points P1, P2, may depend on a width of the first entrance slit 121a, as well as the relative arrangements of the first optical element 122a, the dispersive element 124, the second optical element 122b, and the light sensor 126. Thus, each point of the light sensor 126 may correspond to a wavelength of light. It is to be understood that the first portion 126a of the light sensor 126 may correspond to a fingerprint region of samples. The fingerprint region may correspond to Raman shifts within a range from 200 cm$^{-1}$ to 2400 cm$^{-1}$. By Raman shift, here is meant the difference in wavenumber between the Raman peak and the light 104 emitted by the light source 110. The first optical element 122a, the dispersive element 124, and the second optical element 122b may be arranged such that the first entrance slit 121a is imaged on the light sensor 126. The same may apply to light entering through the second entrance slit 121b. However, in order to increase the readability of Fig. 6, a divergence of light entering through the second entrance slit 121b is not illustrated. As is illustrated in Fig. 6, light entering through the second entrance slit 121b may be reflected by the first optical element 122a towards the dispersive element 124. However, as will be discussed further below, light entering through the second slit may have wavelengths within a narrow wavelength interval, preferably being monochromatic light. For that reason, the light entering through the second entrance slit 121b is not dispersed in the same manner as light entering through the first entrance slit 121a. Therefore, a third light ray 104b in Fig. 6 representing the light entering through the second entrance slit 121b is not dispersed into separate dispersed light rays. The third light ray 104b may then be reflected by the second optical element 122b onto a third point P3 on the light sensor 126. The third point P3 on the light sensor 126 may be on a second portion 126b of the light sensor 126. The extensions, or sizes of the third point P3, may depend on a width of the second entrance slit 121b, as well as the relative arrangements of the first optical element 122a, the dispersive element 124, the second optical element 122b, and the light sensor 126. Hence, the spectrometer 120 is further configured to direct, via the dispersive element 124, light entering through the second entrance slit 121b on the second portion 126b of the light sensor 126.

Now, turning back to Fig. 2 - Fig. 5. The light source 110 is configured to illuminate the dichroic mirror 113 with light having wavelengths within a first wavelength interval. The light source 110 may be configured to emit light 104 having wavelengths within the first wavelength interval. The first wavelength interval may preferably be a narrow wavelength interval ($\pm$ 10 nm). The light source 110 may be configured to emit monochromatic light. The light source 110 may be configured to emit coherent light. The light source 110 may be a laser. The light source 110 may be a Fabry-Perot laser diode. The Fabry-Perot laser diode may be configured to emit light having wavelengths in the near infrared region. Light having wavelengths in the near infrared region may reduce fluorescence of the sample 102 while a strong Raman signal from the sample 102 may be acquired. The light source 110 may be configured to emit light 104 having wavelengths within an interval from about 750 nm to about 850 nm. The light source 110 may be configured to emit light 104 having a wavelength of about 785 nm. As is illustrated in Fig. 2 - Fig. 5, the light source 110 may be configured to illuminate the dichroic mirror 113 via the first refractive element 111. The first refractive element 111 may be a focusing optical element. The first refractive element 111 may, e.g., be a lens configured to reduce a divergence of light 104 emitted by the light source 110. Hence, as is illustrated in the examples of Fig. 2 - Fig. 5, the light 104 emitted by the light source 110 may be substantially collimated after being transmitted through the first refractive element 111. As is illustrated in Fig. 2 - Fig. 5, the optical bandpass filter 112 may be arranged between the light source 110 and the dichroic mirror 113 such that the light source 110 may illuminate the dichroic mirror 113 via the optical bandpass filter 112. The optical bandpass filter 112 may be configured to transmit light having wavelengths within the first wavelength interval. The optical bandpass filter 112 may be an optical element configured to selectively transmit light having wavelengths within a range of wavelengths while being configured to block (e.g., reflecting and/or absorbing) light having other wavelengths. Hence, electromagnetic radiation emitted by the light source 110 having wavelengths outside of the first wavelength interval may thereby be blocked by the optical bandpass filter 112. Such electromagnetic radiation may, e.g., pertain to lower-level transitions in the lasing medium and/or secondary emissions of the light source 110 (in case the light source 110 is a laser).

The dichroic mirror 113 is configured to reflect a first portion 104a of light having wavelengths within the first wavelength interval and to transmit a second portion 104b of light having wavelengths within the first wavelength interval. The first portion 104a of light having wavelengths within the first wavelength interval reflected by the dichroic mirror 113 may be about 95 % of the light having wavelengths within the first wavelength interval incident on the dichroic mirror 113. The second portion 104b of light having wavelengths within the first wavelength interval transmitted through the dichroic mirror 113 may be about 5 % of the light having wavelengths within the first wavelength interval incident on the dichroic mirror 113. Light of the first portion 104a may be reflected by a frontside 113a of the dichroic mirror 113. The first portion 104a of light may be relatively larger than the second portion 104b of light. Put differently, the dichroic mirror 113 may be configured to reflect a major portion of light having wavelengths within the first wavelength interval and to transmit a minor portion of light having wavelengths within the first wavelength interval. Hence, the dichroic mirror 113 may be configured to reflect a major portion of light from the light source 110 and to transmit a minor portion of light from the light source 110. The dichroic mirror 113 is further configured to reflect light of the first portion 104a to illuminate the sample 102. The second refractive element 132 may, as illustrated in the examples of Fig. 2 - Fig. 5, be arranged such that the light of the first portion 104a reflected by the dichroic mirror 113 may be refracted prior to reaching the sample 102. The second refractive element 132 may be a focusing optical element. The second refractive element 132 may be a lens configured to focus the light of the first portion 104a reflected by the dichroic mirror 113 to a sampling position 103. At the sampling position 103, a spot size of the light refracted by the second refractive element 132 may be smaller than 20 µm. The second refractive element 132 may have an adjustable focal length, whereby a position (e.g., a longitudinal position) of the sampling position 103 may be adjusted by adjusting the focal length of the second refractive element 132. The second refractive element 132 may comprise a plurality of individual lenses, and the focal length of the second refractive element 132 may thereby be adjusted by adjusting relative positions of the lenses of the plurality of lenses. The second refractive element 132 may be a liquid lens, and a focal length of the liquid lens may be adjusted by varying a voltage across the liquid lens. In response to an applied voltage, a curvature of the liquid lens may change, whereby the focal length of the liquid lens may change. The dichroic mirror 113 is further configured to transmit light of the second portion 104b through the dichroic mirror 113. The dichroic mirror 113 may thereby be configured to reflect the first portion 104a of light such that the sample 102 is illuminated with light from the light source 110, and to transmit the second portion 104b of light through the dichroic mirror 113.

The sample 102 scatters light upon being illuminated with light 104a from the light source 110 having wavelengths within the first wavelength interval. The light scattered by the sample 102 may be refracted by the second refractive element 132 such that the refracted scattered light is directed towards the dichroic mirror 113. After being refracted by the second refractive element 132, the light scattered by the sample 102 may be more collimated. The second refractive element 132 may be arranged such that the portion of light scattered by the sample 102 that reaches the first entrance slit 121a of the spectrometer 120 may be larger compared to a variant not comprising the second refractive element 132. The light scattered by the sample 102 has wavelengths within a second wavelength interval. The sample 102 may scatter light via Raman scattering. Wavelengths of light scattered by the sample 102 via Raman scattering may be within the second wavelength interval. The second wavelength interval may comprise wavelengths associated with Stokes Raman scattering, anti-Stokes Raman scattering, and Rayleigh scattering. The second wavelength interval may comprise the first wavelength interval. This since Rayleigh scattering may be an elastic scattering process. Hence, wavelengths associated with light scattered by the sample 102 via Rayleigh scattering may be within the first wavelength interval.

However, wavelengths associated with light scattered by the sample 102 via Stokes Raman scattering and/or anti-Stokes Raman scattering may be outside of the first wavelength interval. Hence, the dichroic mirror 113 may be configured to transmit light having wavelengths associated with light scattered by the sample 102 via Stokes Raman scattering and/or anti-Stokes Raman scattering. Upon being illuminated with light, the sample 102 may further reflect the light and/or emit light via fluorescence. A wavelength of light being reflected may be unaffected by the sample 102, and light reflected by the sample 102 may thereby have a wavelength within the first wavelength interval. Light reflected by the sample 102 reaching the dichroic mirror 113 may thereby be reflected by the dichroic mirror 113.

The dichroic mirror 113 is further configured to transmit light having wavelengths within the second wavelength interval. Hence, the dichroic mirror 113 is further configured to transmit light scattered by the sample 102. Put differently, the dichroic mirror 113 may be further configured to transmit light being scattered by the sample 102 via Raman scattering. In particular, the dichroic mirror 113 may be configured to transmit light having wavelengths associated with light scattered by the sample 102 via Stokes Raman scattering and/or anti-Stokes Raman scattering. It is to be understood that the dichroic mirror 113 may be configured to transmit a major portion of light having wavelengths within the second wavelength interval and to reflect a minor portion of light having wavelengths within the second wavelength interval. The reflected portion of light having wavelengths within the second wavelength interval may be small, preferably as small as possible, compared to the transmitted portion of light having wavelengths within the second wavelength interval.

As is illustrated in Fig. 2 - Fig. 5, the spectrometer 120 is arranged to receive, at the first entrance slit 121a, light scattered by the sample 102. Hence, the light scattered by the sample 102 may be directed to the first portion 126a of the light sensor 126 of the spectrometer 120. Therefore, a signal of the first portion 126a of the light sensor 126 pertains to wavelengths of light scattered by the sample 102. Put differently, the signal of the first portion 126a of the light sensor 126 may pertain to a spectrum of the sample 102. As illustrated in Fig. 2 - Fig. 5, the optical longpass filter 114 may be arranged between the dichroic mirror 113 and the spectrometer 120 such that the light scattered by the sample 102 may be received at the first entrance slit 121a via the optical longpass filter 114. The optical longpass filter 114 may be configured to block light having wavelengths within the first wavelength interval. The optical longpass filter 114 may be an optical element configured to transmit electromagnetic radiation having wavelengths longer than a cut-off wavelength while being configured to block (e.g., by reflecting and/or absorbing) electromagnetic radiation having wavelengths shorter than the cut-off wavelength. Preferably, the optical longpass filter 114 may be chosen such that the cut-off wavelength of the optical longpass filter 114 is long than wavelengths of light emitted by the light source 110, and shorter than wavelengths associated with light scattered by the sample 102 via Raman scattering, in particular via Stokes Raman scattering. Hence, intensities of light having wavelengths within the first wavelength interval or shorter reaching the first entrance slit 121a may be reduced. Put differently, an intensity of light emitted by the light source 110 and reflected by the sample 102 towards the first entrance slit 121a may be reduced since the optical longpass filter 114 is configured to block that light. Further, an intensity of Rayleigh-scattered light and/or light associated with fluorescence emanating from the sample 102 towards the first entrance slit 121a may be reduced since the optical longpass filter 114 is configured to block that light. As is further illustrated in Fig. 2 - Fig. 5, the third refractive element 115 may be arranged such that light scattered by the sample 102 and transmitted through the dichroic mirror 113 may be refracted prior to reaching the first entrance slit 121a. The third refractive element 115 may be a focusing optical element. The third refractive element 115 may be a lens configured to focus light on the first entrance slit 121a.

The spectrometer 120 is further arranged to receive, at the second entrance slit 121b, light of the second portion 104b transmitted through the dichroic mirror 113. Hence, light of the second portion 104b transmitted through the dichroic mirror 113 may be directed to the second portion 126b of the light sensor 126 of the spectrometer 120. Put differently, since the light of the second portion 104b transmitted through the dichroic mirror 113 pertains to light emitted by the light source 110, a signal of the second portion 126b of the light sensor 126 pertains to a wavelength of light emitted by the light source 110.

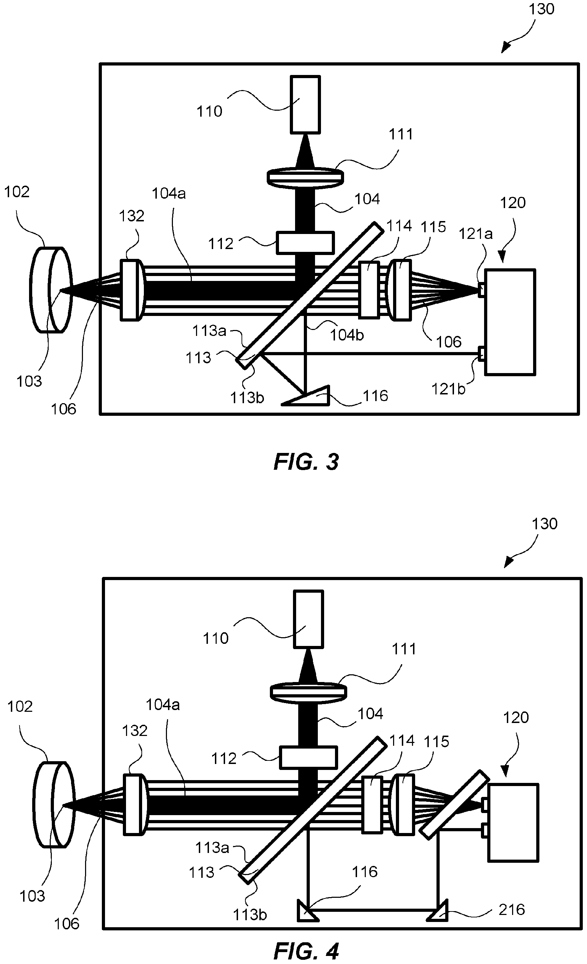

A plurality of different ways of conveying the light of the second portion 104b transmitted through the dichroic mirror 113 to the second entrance slit 121b of the spectrometer 120 may be available to the skilled person. A first variant will be described with reference to Fig. 2, and additional variants will be described in connection to Fig. 3, Fig. 4, and Fig. 5.

As illustrated in the example in Fig. 2, the optical system 130 may further comprise a reflective element 116 configured to direct the light of the second portion 104b transmitted through the dichroic mirror 113 to the second entrance slit 121b. The reflective element 116 may be an optical element configured to reflect incident electromagnetic radiation. The reflective element 116 may be configured to reflect light having wavelengths within a large range of wavelengths. An example of such a reflective element 116 may be a silver-coated mirror. The reflective element 116 may be configured to reflect light having wavelengths within a narrow range of wavelengths. An example of such a reflective element 116 may be a dielectric mirror.

As is seen in a second variant illustrated in Fig. 3, the reflective element 116 may be configured to direct the light of the second portion 104b such that the light of the second portion 104b may be reflected by the dichroic mirror 113 at a backside 113b thereof prior to being received at the second entrance slit 121b. Using the second variant, the second portion 104b of light is reflected on a backside 113b of the dichroic mirror 113, and an intensity of a reflected part of the second portion 104b may be reduced. An advantage of using the second variant will be discussed further below. Using the second variant may further allow for a more compact design of the system 100 for Raman spectroscopy.

As is seen in a third variant illustrated in Fig. 4, the optical system 130 may further comprise a further dichroic mirror 117 arranged in between the dichroic mirror 113 and the spectrometer 120 such that the light scattered by the sample 102 may be transmitted through the further dichroic mirror 117 prior to being received at the first entrance slit 121a, and such that the light of the second portion 104b may be reflected by the further dichroic mirror 117 prior to being received at the second entrance slit 121b. The further dichroic mirror 117 may be of a similar type as the dichroic mirror 113. The further dichroic mirror 117 may be configured to reflect a third portion of light having wavelengths within the first wavelength interval and to transmit a fourth portion of light having wavelengths within the first wavelength interval. Preferably, the fourth portion is substantially smaller than the third portion. The further dichroic mirror 117 may be configured to transmit light having wavelengths within the second wavelength interval. Light of the second portion 104b may, e.g., be conveyed to a backside of the further dichroic mirror 117 by the reflective element 116 and a further reflective element 216 as illustrated in the example of Fig. 4. Even though the further dichroic mirror 117 is illustrated as being arranged in between the third refractive element 115 and the spectrometer 120, it is to be understood that the further dichroic mirror 117 may be arranged at other positions within the optical system 130. For example, the further dichroic mirror 117 may be arranged between the dichroic mirror 113 and the optical longpass filter 114, or between the optical longpass filter 114 and the third refractive element 115. In such case, the further dichroic mirror 117 may be arranged such that light of the second portion 104b reaches the second entrance slit 121b without propagating via the optical long pass filter and/or via the third refractive element 115. Using this third variant, an intensity of light having a wavelength within the first wavelength interval reaching the first entrance slit 121a may be reduced since light reaching the first entrance slit 121a is transmitted through the further dichroic mirror 117. Put differently, an intensity of light emitted by the light source 110 and reflected by the sample 102 towards the first entrance slit 121a may be reduced since the further dichroic mirror 117 may be configured to reflect that light. Further, an intensity of Rayleigh-scattered light emanating from the sample 102 towards the first entrance slit 121a may be further reduced since the further dichroic mirror 117 may be configured to reflect that light. Furthermore, an intensity of light associated with fluorescence emanating from the sample 102 may be reduced since the further dichroic mirror 117 may be configured to reflect that light.

As is seen in a fourth variant illustrated in Fig. 5, the optical system 130 may further comprise an optical fiber 118 configured to convey the light of the second portion 104b transmitted through the dichroic mirror 113 to the second entrance slit 121b. As illustrated in the example of Fig. 5, the optical system 130 may further comprise a coupling optical element 119 configured to couple light of the second portion 104b transmitted through the dichroic mirror 113 into the optical fiber 118. The coupling optical element 119 may, e.g., be a refractive optical element such as a focusing lens. It is further to be understood that, even though not explicitly illustrated in the example of Fig. 5, the optical system 130 may further comprise an out-coupling optical element configured to convey light exiting the optical fiber 118 to enter the second entrance slit 121b. The out-coupling optical element may, e.g., be a refractive optical element such as a focusing lens.

The circuitry 160 is configured to execute a determination function 172. The determination function 172 is configured to determine a first signal associated with the first portion 126a of the light sensor 126. The first signal includes a first information pertaining to a Raman spectrum of the sample 102. The determination function 172 is further configured to determine a second signal associated with the second portion 126b of the light sensor 126. The second signal includes a second information pertaining to wavelengths of light emitted by the light source 110. The first information is thereby allowed to be compensated by means of the second information. This may be advantageous, since wavelengths associated with light scattered by the sample 102 via Raman scattering may depend on a wavelength of light used to illuminate the sample 102. Hence, in case the wavelengths of light used to illuminate the sample 102 vary or drift, the recorded Raman spectrum may vary as well. Since the second information pertains to the wavelength of light emitted by the light source 110, the first information, e.g. a recorded Raman spectrum of the sample 102, may be compensated for variations and/or drifts of the wavelength of the light emitted by the light source 110. Further, the intensity of light emitted by the light source 110 may be substantially higher than light scattered by the sample 102 via Raman scattering (e.g., Stokes Raman scattering and/or anti-Stokes Raman scattering). It may therefore be advantageous that the second signal is determined from light transmitted through the dichroic mirror 113, since the intensity of light from the light source 110 is substantially reduced after being transmitted through the dichroic mirror 113. This, in turn, may result in that intensities of light on the second portion of light sensor 126 are lower and may therefore be more similar to intensities of light on the first portion 126a of the light sensor 126 (i.e., intensities of light associated with Raman scattering of the sample 102). Hence, an exposure (e.g., by using an aperture and/or by setting an exposure time of the light sensor 126) of the first portion 126a of the light sensor 126 and of the second portion 126b of the light sensor 126 may be configured such that the first portion 126a of the light sensor 126 and the second portion 126b of the light sensor 126 are not overexposed (e.g., by saturating the pixels of the light sensor 126). Using the second variant for conveying light of the second portion 104b to the second entrance slit 121b of the spectrometer 120 may, as discussed above in connection with Fig. 3, further reduce an intensity of light on the second portion 126b of the light sensor 126.

The present design of the system 100 for Raman spectroscopy may further allow for a compact design, in particular, by using a single light sensor. The present design of the system 100 for Raman spectroscopy may further allow for information pertaining to the Raman spectrum of the sample 102 and information pertaining to the wavelength of the light emitted by the light source 110 to be recorded by using a single dispersive element 124. This may, in turn, allow for a less expensive system 100 for Raman spectroscopy. Further, since information regarding the wavelength of the light source 110 is captured, this information may be used to determine variations in wavelength and/or intensity of the excitation light (i.e., light 104 emitted by the light source 110). This information may then be used to, e.g., compensate the recorded Raman spectrum for drifts in wavelength and/or intensity of the excitation light.

As is illustrated in the example of Fig. 1, the circuitry 160 may be further configured to execute a compensation function 174. The compensation function 174 may be configured to compensate the first signal based on the second signal. The compensation function 174 may be configured to compensate the first information based on the second information by being configured to determine a wavelength shift of light emitted by the light source 110 based on the second signal and compensate the first signal based on the determined wavelength shift of the light emitted by the light source 110. The compensation function 174 may be configured to compensate the first information based on the second information.

Since the first information pertains to the Raman spectrum of the sample, the first information may be affected by variations in wavelengths and/or intensity of light emitted by the light source. For example, since wavelengths of peaks of the Raman spectrum may depend on the wavelength of light illuminating the sample, variations in the light emitted by the light source may alter the wavelengths of the peaks of the Raman spectrum. In case the variations of the wavelengths of the light emitted by the light source are known (e.g., from the second information determined by the determination function 172), the peaks of the Raman spectrum may be compensated to account for such variations. The relation between wavelengths of the peaks of the Raman spectrum and wavelengths of the light illuminating the sample may be given by:

$$\lambda[\text{nm}] = \frac{1}{\dfrac{1}{\lambda_0[\text{nm}]} - \dfrac{\Delta\sigma[\text{cm}^{-1}]}{10^7}}.$$

$$( 1 )$$

In Eq. 1 above, $\lambda$ is the wavelength in nm ($10^{-9}$ m) of a peak in the Raman spectrum having a Raman shift $\Delta\sigma$ in cm$^{-1}$, and $\lambda_0$ is a wavelength in nm of light used as excitation light. Hence, by knowing the actual wavelength $\lambda_0$ of light 104 emitted by the light source 110 and determining $\lambda$ from the first information (i.e., the recorded Raman spectrum of the sample 102) for one or more Raman peaks, the Raman shift $\Delta\sigma$ for those Raman peaks of the sample may be determined.

Since the peaks of the Raman spectrum may be used to identify substances in the samples, the compensation may allow for a more reliable identification of substances in the sample. The compensation function 174 may be configured to shift the recorded Raman spectrum of the sample 102 (i.e., the first information) in wavelength to compensate for the determined wavelength shift of light 104 emitted by the light source 110. Since a majority of features (e.g., peaks) of the recorded Raman spectrum (i.e., the first information) may be equally affected, the entire recorded Raman spectrum may be shifted to compensate for the determined wavelength shift. This may be implemented via a Fourier transform function which may be configured to transform the first information into the Fourier domain, adjust phases, and return the Fourier transformed first information to the spectral domain.

The compensation function 174 may be configured to compensate the first signal by discarding the determined first signal in response to the second signal being outside a predetermined wavelength interval. Put differently, the compensation function 174 may be configured to discard the recorded spectrum of the sample 102 in response to a determined wavelength of light emitted by the light source 110 being outside the predetermined wavelength interval. The system 100 for Raman spectroscopy may, in such case, automatically repeat the measurement. Alternatively, or additionally, a user of the system 100 for Raman spectroscopy may be prompted (e.g., by a message on a display and/or by activation of an indication light) to repeat the measurement. Hence, the first information may be compensated for variations or drifts in wavelength and/or intensity of light emitted by the light source 110. This may, in turn, allow for the Raman spectrum of the sample to be compensated for mode hopping in the light source 110. Mode hopping is a behavior that may occur for Fabry-Perot laser diodes, which may abruptly change wavelengths of light emitted by the Fabry-Perot laser diode. Hence, the present system 100 for Raman spectroscopy may allow for compensating the Raman spectrum due to the effects of mode hopping in the light source 110.

The circuitry 160 may be further configured to execute a sample identification function 176. The sample identification function 176 may be configured to compare the spectrum and/or compensated spectrum with a database comprising entries correlating spectra with substances. Thereby, one or more substances of the sample 102 may thereby be identified using the system 100 for Raman spectroscopy.

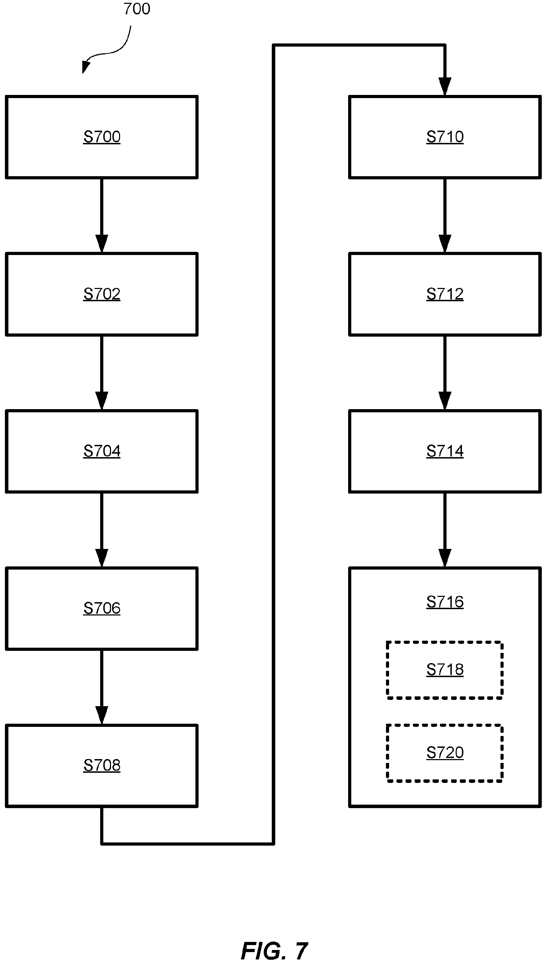

Figure 7 is a block scheme of a method for compensating a first signal based on a second signal, the first signal including information pertaining to a Raman spectrum of a sample 102 and the second signal including information pertaining to wavelengths of light emitted by a light source 110. The method comprises emitting, from the light source 110, light having wavelengths within a first wavelength interval; reflecting, using a dichroic mirror 113, a first portion 104a of the emitted light to a sample 102; transmitting, through the dichroic mirror 113, a second portion 104b of the emitted light to a second entrance slit 121b of a spectrometer 120; transmitting, through the dichroic mirror 113, light scattered by the sample 102 to a first entrance slit 121a of the spectrometer 120, wherein the light scattered by the sample 102 has wavelengths within a second wavelength interval; dispersing, using a dispersive element 124 of the spectrometer 120, the second portion 104b of the emitted light onto a second portion of a light sensor 126 of the spectrometer 120; dispersing, using the dispersive element 124 of the spectrometer 120, the light scattered by the sample 102 onto a first portion 126a of the light sensor 126 of the spectrometer 120; determining a second signal associated with the second portion 126b of the light sensor 126, wherein the second signal includes information pertaining to wavelengths of the emitted light; determining a first signal associated with the first portion 126a of the light sensor 126, wherein the first signal includes information pertaining to a Raman spectrum of the sample 102; and compensating the first signal based on the second signal, whereby the first information is compensated by means of the second information. The act of compensating the first signal based on the second signal may comprise: determining a wavelength shift of the emitted light based on the second signal; and compensating the first signal based on the determined wavelength shift of the emitted light.

The person skilled in the art realizes that the present inventive concept by no means is limited to the preferred variants described above. On the contrary, many modifications and variations are possible within the scope of the appended claims.

For example, even though not explicitly illustrated in the figures, the further dichroic mirror 117 may be used with the fourth variant discussed in connection with Fig. 5. In such case, the optical fiber 118 may be used instead of the reflective element 116 and/or the further reflective element 216 in Fig. 4, allowing for a variant of the optical system 130 which may comprise an optical fiber 118 and a further dichroic mirror 117.

As a further example, the system 100 for Raman spectroscopy has mainly been described as a handheld system. However, it is understood by the skilled person that the present system 100 and method may be beneficial to a stationary system such as a laboratory system for Raman spectroscopy.

Additionally, variations to the disclosed variants can be understood and effected by the skilled person in practicing the claimed invention, from a study of the drawings, the disclosure, and the appended claims.

**Claims**

1. A system (100) for Raman spectroscopy comprising:

   a dichroic mirror (113) configured to reflect a first portion (104a) of light having wavelengths within a first wavelength interval and to transmit a second portion (104b) of light having wavelengths within the first wavelength interval, and to transmit light having wavelengths within a second wavelength interval;
   a light source (110) configured to illuminate the dichroic mirror (113) with light having wavelengths within the first wavelength interval;
   a spectrometer (120) comprising:

      a light sensor (126),
      a dispersive element (124),
      a first entrance slit (121a), and
      a second entrance slit (121b),
      wherein the spectrometer (120) is configured to direct, via the dispersive element (124), light entering through the first entrance slit (121a) to a first portion (126a) of the light sensor (126), and to direct, via the dispersive element (124), light entering through the second entrance slit (121b) to a second portion (126b) of the light sensor (126);

   wherein the dichroic mirror (113) is configured to reflect light of the first portion (104a) to illuminate a sample, and to transmit light of the second portion through the dichroic mirror (113);
   wherein the dichroic mirror (113) is further configured to transmit light scattered by the sample, wherein the light scattered by the sample has wavelengths within the second wavelength interval;

wherein the spectrometer (120) is arranged to receive, at the first entrance slit (121a), light scattered by the sample, and to receive, at the second entrance slit (121b), light of the second portion transmitted through the dichroic mirror (113);
the system (100) further comprising:

circuitry (160) configured to execute:
a determination function (172) configured to determine a first signal associated with the first portion (126a) of the light sensor (126), and a second signal associated with the second portion (126b) of the light sensor (126); and

wherein the first signal includes a first information pertaining to a Raman spectrum of the sample and the second signal includes a second information pertaining to wavelengths of light emitted by the light source (110), thereby allowing the first information to be compensated by means of the second information.

2. The system (100) according to claim 1, wherein the circuitry (160) is further configured to execute:
a compensation function (174) configured to compensate the first signal based on the second signal.

3. The system (100) according to claim 2, wherein the compensation function (174) is configured to compensate the first information based on the second information by being configured to:

determine a wavelength shift of light emitted by the light source (110) based on the second signal; and
compensate the first signal based on the determined wavelength shift of the light emitted by the light source (110).

4. The system (100) according to any one of claims 1-3, further comprising:

an optical bandpass filter (112) arranged between the light source (110) and the dichroic mirror (113) such that the light source (110) illuminates the dichroic mirror (113) via the optical bandpass filter (112); and
wherein the optical bandpass filter (112) is configured to transmit light having wavelengths within the first wavelength interval.

5. The system (100) according to any one of claims 1-4, further comprising:

an optical longpass filter (114) arranged between the dichroic mirror (113) and the spectrometer (120) such that the light scattered by the sample is received at the first entrance slit (121a) via the optical longpass filter (114); and
wherein the optical longpass filter (114) is configured to block light having wavelengths within the first wavelength interval.

6. The system (100) according to any one of claims 1-5, further comprising:
a reflective element (116) configured to direct the light of the second portion (104b) transmitted through the dichroic mirror (113) to the second entrance slit (121b).

7. The system (100) according to claim 6, wherein the reflective element (116) is configured to direct the light of the second portion (104b) such that the light of the second portion (104b) is reflected by the dichroic mirror (113) at a backside (113b) thereof prior to being received at the second entrance slit (121b).

8. The system (100) according to claim 6, further comprising:
a further dichroic mirror (117) arranged in between the dichroic mirror (113) and the spectrometer (120) such that the light scattered by the sample is transmitted through the further dichroic mirror (117) prior to being received at the first entrance slit (121a), and such that the light of the second portion (104b) is reflected by the further dichroic mirror (117) prior to being received at the second entrance slit (121b).

9. The system (100) according to any one of claims 1-5, further comprising:
an optical fiber (118) configured to convey the light of the second portion (104b) transmitted through the dichroic mirror (113) to the second entrance slit (121b).

10. The system (100) according to any one of claims 1-9, wherein the system (100) is a handheld system.

**11.** A method (70) for compensating a first signal based on a second signal, the first signal including information pertaining to a Raman spectrum of a sample and the second signal including information pertaining to wavelengths of light emitted by a light source (110), the method comprising:

emitting (S700), from the light source (110), light having wavelengths within a first wavelength interval;

reflecting (S702), using a dichroic mirror (113), a first portion (104a) of the emitted light to a sample;

transmitting (S704), through the dichroic mirror (113), a second portion (104b) of the emitted light to a second entrance slit (121b) of a spectrometer (120);

transmitting (S706), through the dichroic mirror (113), light scattered by the sample to a first entrance slit (121a) of the spectrometer (120), wherein the light scattered by the sample has wavelengths within a second wavelength interval;

dispersing (S708), using a dispersive element (124) of the spectrometer (120), the second portion (104b) of the emitted light onto a second portion of a light sensor (126) of the spectrometer (120);

dispersing (S710), using the dispersive element (124) of the spectrometer (120), the light scattered by the sample onto a first portion (126a) of the light sensor (126) of the spectrometer (120);

determining (S712) a second signal associated with the second portion (126b) of the light sensor (126), wherein the second signal includes information pertaining to wavelengths of the emitted light;

determining (S714) a first signal associated with the first portion (126a) of the light sensor (126), wherein the first signal includes information pertaining to a Raman spectrum of the sample; and

compensating (S716) the first signal based on the second signal, whereby the first information is compensated by means of the second information.

**12.** The method (70) according to claim 11, wherein the act of compensating (S716) the first signal based on the second signal comprises:

determining (S718) a wavelength shift of the emitted light based on the second signal; and

compensating (S720) the first signal based on the determined wavelength shift of the emitted light.

**FIG. 1**

**FIG. 2**

**FIG. 3**

**FIG. 4**

**FIG. 5**

**FIG. 6**

700

S700

S702

S704

S706

S708

S710

S712

S714

S716

S718

S720

*FIG. 7*

Europäisches
Patentamt

European
Patent Office

Office européen
des brevets

# EUROPEAN SEARCH REPORT

Application Number

**EP 21 21 7931**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 751 382 A2 (KYOTO DAIICHI KAGAKU KK [JP]) 2 January 1997 (1997-01-02) | 1-12 | INV.<br>G01N21/65 |
| Y | * p. 1, l. 7-9; p.1, l. 46, to p. 2, l. 3; p. 4, l. 57, to p. 5, l. 43; figure 2 * | 3,12 | G01N21/27<br><br>ADD.<br>G01N21/47 |
| | ----- | | |
| A | US 6 141 095 A (ALLEN FRITZ SCHREYER [US] ET AL) 31 October 2000 (2000-10-31) * column 9, line 3 - column 10, line 60; figure 1 * | 1-12 | |
| | ----- | | |
| A | US 2021/072158 A1 (ILCHENKO OLEKSII [DK] ET AL) 11 March 2021 (2021-03-11) * paragraph [0189]; figure 7 * | 1-12 | |
| | ----- | | |
| Y | US 2005/128476 A1 (ZHAO JUN [US]) 16 June 2005 (2005-06-16) * paragraphs [0043], [0046]; figure 3A * | 3,12 | |
| | ----- | | |

TECHNICAL FIELDS
SEARCHED (IPC)

**G01N**

The present search report has been drawn up for all claims

| Place of search | Date of completion of the search | Examiner |
|---|---|---|
| Munich | 3 June 2022 | Weinberger, Thorsten |

**EP 4 206 655 A1**

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2022

| Patent document cited in search report | | Publication date | Patent family member(s) | | | Publication date |
|---|---|---|---|---|---|---|
| EP 0751382 | A2 | 02-01-1997 | CN | 1153302 | A | 02-07-1997 |
| | | | DE | 69601395 | T2 | 02-09-1999 |
| | | | EP | 0751382 | A2 | 02-01-1997 |
| | | | JP | H0915156 | A | 17-01-1997 |
| | | | US | 5617205 | A | 01-04-1997 |
| US 6141095 | A | 31-10-2000 | NONE | | | |
| US 2021072158 | A1 | 11-03-2021 | EP | 3743699 | A1 | 02-12-2020 |
| | | | US | 2021072158 | A1 | 11-03-2021 |
| | | | WO | 2019145005 | A1 | 01-08-2019 |
| US 2005128476 | A1 | 16-06-2005 | NONE | | | |

EPO FORM P0459

For more details about this annex : see Official Journal of the European Patent Office, No. 12/82